(19)

Europäisches
Patentamt
European
Patent Office
Office européen
des brevets

(11) **EP 2 949 791 A1**

(12) **EUROPEAN PATENT APPLICATION**
published in accordance with Art. 153(4) EPC

(43) Date of publication:
**02.12.2015 Bulletin 2015/49**

(21) Application number: **14743169.6**

(22) Date of filing: **23.01.2014**

(51) Int Cl.:
*D01F 9/08* (2006.01)    *D04H 1/4209* (2012.01)

(86) International application number:
**PCT/JP2014/051399**

(87) International publication number:
**WO 2014/115814 (31.07.2014 Gazette 2014/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.01.2013 JP 2013009801**

(71) Applicant: **Denki Kagaku Kogyo Kabushiki Kaisha Tokyo 103-8338 (JP)**

(72) Inventors:
• **OHSHIMA Yasutaka**
**Itoigawa-shi**
**Niigata 949-0393 (JP)**

• **SAKAI Haruko**
**Itoigawa-shi**
**Niigata 949-0393 (JP)**
• **EGUCHI Masataka**
**Itoigawa-shi**
**Niigata 949-0393 (JP)**
• **FUJITA Kazutaka**
**Itoigawa-shi**
**Niigata 949-0393 (JP)**
• **SUZUKI Ryochi**
**Itoigawa-shi**
**Niigata 949-0393 (JP)**

(74) Representative: **Adam, Holger**
**Kraus & Weisert**
**Patentanwälte PartGmbB**
**Thomas-Wimmer-Ring 15**
**80539 München (DE)**

(54) **ALUMINA FIBER AND ALUMINA FIBER AGGREGATE**

(57) There is provided an alumina fiber capable of fixing a honeycomb carrier while maintaining elasticity for a long period of time even in a severe usage environment, and an alumina fiber aggregate formed of the fiber. Problems in a gripping material of an automotive honeycomb carrier are solved by applying an alumina fiber containing from 70 to 98% by mass of alumina and from 2 to 30% by mass of silica, having an average fiber diameter of from 3.0 to 8.0 $\mu$m, a ratio of fibers having a fiber diameter exceeding 10 $\mu$m being 5% or less in terms of the number of fibers and a size of a mullite crystallite contained in each fiber of from 10 to 1500 Å, and by forming an alumina fiber aggregate by using the fibers.

**Description**

TECHNICAL FIELD

The present invention relates to an alumina fiber and an alumina fiber aggregate.

BACKGROUND ART

By using their excellent heat resistance and thermal insulating properties, inorganic fibers such as amorphous ceramic fibers, crystalline alumina fibers, rock wool, glass wool and the like have been widely used as, for example, thermal insulating materials of a heating furnace. Further, in the field of automotive components, inorganic fibers are used as holding materials (also referred to as gripping materials) disposed between a ceramic honeycomb carrier and a housing case thereof, which the carrier is used as a particulate filter of an exhaust gas purification catalyst converter or a diesel engine, and prevent the honeycomb carrier from hitting against the inner wall of the housing case due to vibration or an impact and being damaged. In particular, environmental performance is more and more important in automobiles in recent years, and thus the gripping material of the honeycomb carrier is required to maintain elasticity of a certain level or more for a long period of time without being weaken due to a compressive load, in addition to advanced heat resistance or thermal insulating properties, in order to maintain its properties while withstanding exhaust gas at a high temperature or violent vibration (Patent Document 1).

On the other hand, with consideration for health, there are disclosed an alumina fiber aggregate containing no fibers having a small diameter which is said to be easily absorbed to a human body, that is, an alumina fiber aggregate having an appropriate fiber diameter (Patent Document 2, Patent Document 3 and Patent Document 4).

However, in a case where comparison is made among alumina fiber aggregates having the same mass, since the ratio of single fibers which are rigid and easily broken is increased and the number of fibers is relatively decreased as the average fiber diameter thereof becomes larger, it is difficult to maintain a predetermined thickness or resilience for a long period of time in some cases. For this reason, by focusing the number of rigid fibers in which fibers have been fusion-bonding with each other to be thickened, a development has been made on an alumina fiber aggregate whose characteristics are attempted to be improved by defining the upper limit of the content ratio thereof. In addition, there are known gripping materials in which strength of single fibers, contents of a non-fiber product referred to as a shot or fibers with a large diameter, or crystallinity of fibers is defined (Patent Document 1 and Patent Document 5).

PRIOR ART DOCUMENTS

PATENT DOCUMENTS

    Patent Document 1: JP-A-H07-286514
    Patent Document 2: JP-A-2003-105658
    Patent Document 3: JP-A-2007-332531
    Patent Document 4: JP-A-2005-120560
    Patent Document 5: JP-A-2010-31416

SUMMARY OF THE INVENTION

PROBLEM THAT THE INVENTION IS TO SOLVE

The present invention is to provide an alumina fiber which is capable of fixing a honeycomb carrier while maintaining elasticity for a long period of time as compared to a conventional product even in a severe usage environment, and to provide an alumina fiber aggregate formed of the alumina fiber.

MEANS FOR SOLVING THE PROBLEM

The present invention is one in which further investigations have been made on the conventional techniques from a basic point of view and completed by carefully examining influences of thickness and content of fibers, specific surface area changed by firing and size of a mullite crystallite contained in each of the fibers, on restorability against compressive deformation of an aggregate obtained by forming the alumina fibers. For example, an alumina fiber capable of maintaining elasticity of a certain level or more for a long period of time even when used as an automotive gripping material in a severe usage environment and an alumina fiber aggregate formed by molding the alumina fibers have been obtained.

That is, the present invention is (1) an alumina fiber having a chemical composition containing an alumina of from 70% by mass to 98% by mass and a silica of from 2% by mass to 30% by mass, having an average fiber diameter of from 3.0 $\mu$m to 8.0 $\mu$m, having a ratio of fibers having a fiber diameter exceeding 10 $\mu$m being 5% or less based on the number of fibers, and having a size of a mullite crystallite contained in each fiber of from 10 Å to 1500 Å; (2) the alumina fiber according to (1) having a specific surface area of the alumina fiber being from 0.1 m²/g to 70 m²/g; and (3) an alumina fiber aggregate containing the alumina fiber according to (1) or (2).

EFFECTS OF THE INVENTION

It is possible to provide: an alumina fiber which has excellent shape restorability of the fiber aggregate when a compressive load is repeatedly applied thereto as compared to an aggregate formed of conventional alumina fibers and which can, as a result, fix a honeycomb carrier while maintaining elasticity for a long period of time even when used, for example, as an automotive gripping material in a severe usage environment; and an alumina fiber aggregate formed of the alumina fiber.

MODES FOR CARRYING OUT THE INVENTION

Hereinafter, the present invention will be described in detail.

The alumina fiber of the present invention is a fiber containing an alumina component of from 70% by mass to 98% by mass and a silica component of from 2% by mass to 30% by mass or, more preferably, containing an alumina component of from 72% by mass to 95% by mass and a silica component of from 5% by mass to 28% by mass.

In addition, another present invention is an aggregate containing the above-described fiber, for example, being accumulated and molded in the form of a sheet or mat.

When the alumina component contained in the alumina fiber is less than 70% by mass and the silica component exceeds 30% by mass, it is difficult to exhibit the shape restorability with respect to compression deformation because the fiber becomes softened. Further, when the alumina component contained in the alumina fiber exceeds 98% by mass and the silica component is less than 2% by mass, it tends to be difficult to maintain the elasticity because the fiber becomes brittle. Moreover, approximately several percent by mass of impurities may be contained within the range not inhibiting the effects of the present invention. Examples of the alumina component contained in the fiber include $\alpha$-alumina, $\gamma$-alumina, $\delta$-alumina, and 0-alumina and examples of the silica component include $3Al_2O_3 \cdot 2SiO_2$ (mullite) in addition to amorphous silica. It is preferable to change the kind and amount of inorganic compound to be formed, depending on the usage thereof.

As a method of producing the alumina fiber of the present invention and the alumina fiber aggregate containing the fibers, there is mentioned a method, as one example, containing preparing a spinning dope which contains an alumina and silica source and to which a viscosity imparting agent is added, spinning and drying this to be processed to a fiber precursor, accumulating and molding the fiber precursor in the form of, for example, a sheet or a mat, sending it to a heating furnace, removing a residue in the fiber precursor, and firing the resultant to finally obtain an alumina fiber aggregate.

As a method of preparing the spinning dope of alumina fiber, for example, an alumina source such as an aluminum oxychloride aqueous solution and a silica source such as a silica sol are blended at a ratio of alumina component to silica component such that the final alumina fiber has a desired chemical composition; a viscosity imparting agent such as polyvinyl alcohol, polyethylene oxide, or polyethylene glycol is blended thereto and uniformly mixed with each other; and then the mixture is concentrated under a reduced pressure to prepare a viscous spinning dope having a viscosity of preferably from 500 mPa·s to 10000 mPa·s and more preferably from 1000 mPa·s to 5000 mPa·s. There are tendencies that the diameter of the alumina fiber becomes smaller when the viscosity of the spinning dope becomes lower and the diameter of the fiber becomes larger when the viscosity thereof becomes higher. At this time, the fiber is likely to be cut in the middle thereof when the viscosity of the spinning dope is lower than 500 mPa·s and the fiber diameter becomes excessively larger and this causes a problem in the process of spinning when the viscosity thereof exceeds 10000 mPa·s.

In addition, in the case where polyvinyl alcohol is used as the viscosity imparting agent, the degree of polymerization thereof is preferably from 1000 to 2500 and more preferably from 1600 to 2000. The concentration thereof is preferably from 6% by mass to 12% by mass based on the total solid contents of the alumina component and the silica component set as 100% by mass. When the concentration thereof is less than 6% by mass, there are tendencies that the spinnability is insufficient and fused fibers are increased even if the concentration is conducted to a predetermined viscosity. Further, when the concentration thereof exceeds 12% by mass, there may be a case where the viscosity of the spinning dope becomes too increased to be concentrated sufficiently and then a spinning dope with excellent spinnability cannot be prepared. By appropriately changing the conditions of preparing the spinning dope, the diameter of the final alumina fiber can be adjusted to be within the preferable range.

As a method of molding and processing a spinning dope to an alumina fiber precursor, there is a method, for example, containing ejecting the spinning dope to the air from pores of a molding die in a filamentous state and rapidly drying. There are no particular limitations in the structure or shape of the molding die, the diameter or arrangement of pores, the discharge amount or discharge pressure of the spinning dope, and the space temperature, pressure, gas component, humidity, and presence of the air flow of a destination to which the spinning dope is ejected. The molding die may be fixed or may have a movable structure. In more specific example, a fiber precursor can be obtained by supplying a spinning dope into a hollow disk rotating at a circumferential velocity of from 5 m/s to 100 m/s, ejecting the spinning dope in a radial form (filamentous) from a plurality of pores which are provided on the circumferential surface of the disk and have a diameter of from 0.1 mm to 1.3 mm, and rapidly drying it with being brought into contact with high-speed airflow. In the method of using the rotating disk, the amount of the spinning dope to be discharged from one pore depends on the size of the disk, the pore diameter, the number of pores, and the viscosity of the spinning dope, but the practical range thereof is preferably from 5 mL/h to 100 mL/h. When the amount thereof is less than 5 mL/h, the diameter of fibers becomes excessively small and thus the fibers may be scattered. In addition, when the amount thereof exceeds 100 mL/h, the diameter becomes excessively large and thus the fibers become rigid, and the number of broken fibers is increased so that the performance of maintaining elasticity of the alumina fiber aggregate for a long period of time is degraded. The temperature of dry air is preferably in the range of from 10°C to 200°C. When lower than 10°C, fibers may be cut or fused to each other in many cases since the fiber precursor is not sufficiently dried. In addition, when higher than 200°C, since the drying overly advances rapidly and thus a tread becomes difficult to extend, the fibers become thicker and handling of the obtained fiber precursor in the post-process becomes difficult in some cases.

As a method of accumulating and molding the dried fiber precursor in the form of a sheet or a mat, there is a method, for example, containing naturally dropping the fiber precursor which is ejected to the air during spinning, from above into a mold while being allowed to float in the air to be accumulated, to thereby shape into the form of a sheet or a mat. At that time, the density can be made higher by mechanically compressing the fiber precursor accumulated, suctioning from below the mold, or the like. A portion corresponding to a pedestal at the time of accumulating and molding the fiber precursor may have a fixed structure or a movable structure such as a belt conveyor. It is preferable in terms of the quality management that the fiber precursor accumulated and molded is maintained at from 10°C to 150°C before being sent to a heating furnace.

As a method of heating the accumulated and molded alumina fiber precursor to finally obtain an aggregate containing alumina fiber, there are a method, for example, containing a degreasing process, as the first stage, of heating the alumina fiber precursor accumulated and molded in the form of a sheet or a mat from the temperature after accumulated and molded, that is, normally from 10°C to 150°C to from 500°C to 1000°C as the maximum temperature in an air atmosphere, thereby drying moisture remaining in the alumina fiber precursor during the heating and discharging volatile acidic components such as hydrogen chloride and organic substances such as aldehydes which are decomposed materials of a viscosity imparting agent; and a crystallization process, as the second stage, of firing the alumina fiber precursor by setting the maximum temperature to be from1000°C to 1300°C in an air atmosphere thereby allowing a part of inorganic compound to be crystallized, by using heating furnaces different from each other in the respective processes, or a method of performing the treatments by changing the heating conditions in the case of using the same heating furnace. As the heating furnace, a continuous furnace that transports the alumina fiber precursor by using a belt conveyor or a roller or a batch type furnace can be suitably used. It may be promptly transitioned from the degreasing process to the crystallization process or transitioned after a certain time interval, but in general, a method of promptly transitioning is used when the productivity is considered. The temperature of the degreasing process and the crystallization process of the present invention is a measured value of the ambient temperature in the heating furnace. In this case, the temperature is usually measured by a thermocouple or the like installed in the heating furnace.

A structure allowing introduction of hot air and discharge of volatile components is preferable when used as the heating furnace during the degreasing process. The maximum temperature during the degreasing process is set to be from 500°C to 1000°C and preferably from 650°C to 1000°C. When lower than 500°C, since the process is transitioned to the crystallization process in a state in which degreasing is insufficient, a phenomenon in which the specific surface area becomes greater is observed and fibers become easily broken due to increased defects of alumina fiber. Further, when higher than 1000°C, since crystallization of mullite concurrently advances also during the degreasing process, the size of crystallite is increased so that fibers become rigid. As a result, in both cases, the shape restorability with respect to compression deformation is degraded. In the case where the temperature is increased from the temperature before the accumulated and molded fiber precursor is heated, that is, a temperature of from 10°C to 150°C and preferably a temperature of from 20°C to 60°C to a temperature of from 500°C to 1000°C and preferably a temperature of from 650°C to 1000°C in a heating furnace, the temperature may be continuously increased or stepwisely increased until the temperature reaches the maximum temperature, but the average temperature rising rate is preferably from 1°C/min to 50°C/min and more preferably from 2°C/min to 30°C/min during that time period. When the average temperature increasing rate is greater than 50°C/min, since the volume of fibers are contracted while volatilization of moisture or acidic components or decomposition of a viscosity imparting agent does not sufficiently occur, there is a tendency that the fibers become highly defective and it is difficult to exhibit the characteristics thereof. When lower than 1°C/min, the heating furnace is required to be unnecessarily made large in some cases. The time required for the degreasing process is not particularly limited, but it is preferably from 20 minutes to 600 minutes and more preferably from 30 minutes to 300 minutes. When shorter than 20 minutes, the volatile components are insufficiently removed in some cases. When holding for 600 minutes, since the volatile components are almost completely removed, the removal effect is not improved anymore even when the time thereof is longer than 600 minutes.

As for the heating furnace in the crystallization process, a structure having an electric heating system using a heating element is preferably used, and the crystalline form of the inorganic component contained in the alumina fiber can be controlled by changing the maximum temperature of the crystallization process.

In the crystalline process in the present invention, in order to achieve a heat resistant temperature and excellent elasticity suitable for the gripping material of an exhaust gas purifier, the maximum temperature in the crystalline process is from 1000°C to 1300°C, preferably from 1100°C to 1250°C, more preferably from 1150°C to 1250°C, and still more preferably from 1150°C to 1200°C. When the maximum temperature is lower than 1000°C, the alumina fiber is degraded in heat resistance and is not suitable for the use temperature of the gripping material in the exhaust gas purifier in some cases. On the other hand, when higher than 1300°C, crystallization of the alumina fiber such as mullite excessively advances and thus the fiber strength is degraded in some cases. The temperature may be continuously increased or stepwisely increased until reaching the maximum temperature, but the average temperature increasing rate until reaching the maximum temperature is usually and preferably from 1°C/min to 120°C/min although it is largely affected by the structure of the heating furnace or the temperature of the alumina fiber before the crystallization process is carried out. When 1°C/min or lower, it takes a long time to raise the temperature in some cases. When higher than 120°C/min, it is difficult to control a heater in some cases. The heating time depends on the temperature increasing rate and is not particularly limited, but it is usually and preferably from 5 minutes to 120 minutes and more preferably from 10 minutes to 60 minutes. When the holding time at the maximum temperature is shorter than 5 minutes, since the crystallization of the alumina fiber does not sufficiently advance, unevenness is generated in a microstructure. On the other hand, when the holding time thereof is longer than 120 minutes, the crystallization excessively advances. Since the fiber strength is decreased in both cases, the shape restorability of an aggregate containing alumina fiber becomes degraded. The alumina fiber after the crystallization process is finished needs to be rapidly cooled such that crystallization does not advance anymore. The method thereof is not particularly limited, but in general, preferably used is a method of taking out in the air atmosphere and naturally cooling at room temperature of from 5°C to 40°C, a method of blowing cooling air, or a method of bringing into contact with a cooled flat surface or curved surface such as a roll.

The structure of the heating furnace or the like for satisfying the temperature increasing rate, hot air supply, or discharge conditions during the degreasing process and the crystallization process is not particularly limited. For example, use can be preferably made of a batch furnace such as a cantal furnace or a siliconit furnace, or a continuous furnace such as a roller-hearth furnace or a mesh belt type furnace. In addition, these devices can be appropriately combined with each other to be used if necessary.

The chemical composition of the alumina fiber of the present invention can be quantified by using fluorescent X-ray analysis, chemical analysis or the like. In addition, the size of the crystallite of the inorganic compound can be quantified and identified by using powder X-ray analysis. Further, it is confirmed by using fluorescent X-ray analysis that the chemical composition at the time of preparing raw materials coincides with the chemical composition of completed alumina fiber.

The measurement value of the diameter of the alumina fiber of the present invention is a value acquired by collecting fiber samples from the completed alumina fiber aggregate, providing a measuring device for a two-dimensional image of one fiber observed by a microscope, and correcting the magnification thereof. At this time, the value becomes closer to a true value when the number of sample fibers used for measuring the fiber diameter is greater, but it is usually from 100 to 500 fibers. A plurality of fibers is rarely fused to each other, but such fibers are excluded. The average fiber diameter of the alumina fiber of the present invention is in the range of from 3.0 $\mu$m to 8.0 $\mu$m and the ratio of fibers having a fiber diameter exceeding 10 $\mu$m is less than 5% in terms of the number of fibers. Fibers having an average fiber diameter of less than 3.0 $\mu$m, which are easily scattered, may harm the health through suction. When exceeding 8.0 $\mu$m, since the flexibility of the fibers is deteriorated, the restorability with respect to deformation may be degraded. Further, even when the ratio of fibers having a fiber diameter exceeding 10 $\mu$m, which is rigid and easily broken, exceeds 5%, it is difficult to obtain an alumina fiber aggregate that maintains appropriate elasticity for a long period of time in some cases.

For the purpose of improving the shape restorability at the time when a compressive load is repeatedly applied to the alumina fiber aggregate, examinations have been made by particularly focusing on the size of the mullite crystallite contained in each of the alumina fibers forming an alumina fiber aggregate, as a result thereof, it was found that the strength of fibers is increased until the size of the mullite crystallite becomes a certain level and that the strength or the restorability with respect to deformation is rapidly degraded when the size thereof exceeds a limit value. The size D (unit: Å) of the mullite crystallite referred to in the present invention is a value calculated based on a Scherrer method (Expression 1) from the width of a peak acquired by an X-ray diffraction measurement. In order to more accurately acquire the size of a crystallite, the width of the peak was corrected by a half-width correction curve calculated by using an external standard sample.

$$(\text{Expression 1})$$
$$D = K \cdot \lambda / (\beta \cdot \cos\theta)$$

K: Scherrer constant, set to 0.94
$\lambda$: Wavelength of X-ray being used (unit: Å)
$\beta$: Full width half maximum of peak (rad)
$\theta$: Bragg angle (1/2 of X-ray diffraction angle $2\theta$, rad)

Further, the size of the mullite crystallite contained in each of the fibers constituting the alumina fiber aggregate of the present invention is from 10 Å to 1500 Å, preferably from 10 Å to 1000 Å, more preferably from 100 Å to 1000 Å, and still more preferably from 300 Å to 800 Å. When exceeding 1500 Å, the crystallization of the mullite excessively advances to be rigid and the restorability with respect to deformation shows a tendency of being significantly degraded.

The specific surface area of the alumina fiber of the present invention is preferably from 0.1 m²/g to 70 m²/g, more preferably from 0.1 m²/g to 50 m²/g, still more preferably from 0.1 m²/g to 20 m²/g, and most preferably from 0.1 m²/g to 5 m²/g. Highly defective fibers having roughness such that the specific surface area exceeds 70 m²/g cannot exhibit restorability because they are easily broken. The specific surface area of the alumina fiber of the present invention is a specific surface area measured by a method in accordance with JIS Z8830:2001 (method of measuring specific surface area of powder (solid) by gas adsorption) by using an apparatus which is commonly known as a specific surface area meter of BET fluid process (single point process).

The shape restorability in a test of repeatedly applying a compressive load, which is referred to in the present invention, is a test made in assumption that the aggregate containing the alumina fiber of the present invention is used as an automotive honeycomb gripping material, and it is evaluated by using shape (height) restorability obtained after cutting out a sample piece having a certain thickness from the alumina fiber aggregate and repeatedly applying a load thereto to be compressively deformed. A restoring magnification value is defined as a numerical value serving as an index at this time, and the case where the value is 3.0 or greater is determined that the function of maintaining appropriate elasticity for a long period of time is improved as compared to that of a conventional alumina fiber aggregate.

EXAMPLES

Hereinafter, the present invention will be more specifically described with reference to the results of evaluation tests by using Examples according to the present invention and Comparative Examples. The present invention is not limited thereto.

(Example 1)

To 5000 g of an aluminum oxychloride aqueous solution having an alumina solid content concentration of 20.0% by mass was mixed 1850 g of colloidal silica having a silica concentration of 20.0% by mass so as to achieve the alumina component being 73% by mass and the silica component being 27% by mass, thereto was further mixed 1096 g of an aqueous solution containing partially saponified polyvinyl alcohol (manufactured by DENKI KAGAKU KOGYO KABUSHIKI KAISHA) having a polymerization degree of 1700 in a solid content concentration of 10% by mass such that the content thereof became 8% by mass with respect to the total solid content of the alumina component and the silica component, followed by being dehydrated and concentrated under a reduced pressure, to thereby prepare a spinning dope having a viscosity of 3300 mPa·s. The spinning dope was supplied to a disk such that a stock solution was discharged from 300 micropores each having a diameter of 0.2 mmϕ) which were provided at equal intervals on the circumferential surface of a hallow disk having a diameter of 350 mmϕ and that the discharge amount was 25 mL/h per one pore, and the spinning dope was radially ejected from pores by rotating the disk at a circumferential velocity of 47.6 m/sec. The stock solution scattered from micropores was dried while being allowed to float and drop in hot air which was adjusted to be in the range of 145 ± 5°C, to thereby obtain a fiber precursor. The fiber precursor was accumulated in the form of a mat in a square frame having a length of 1 m and a width of 1 m in a cotton-collecting chamber with a system of suctioning from below.

The accumulated and molded body of the alumina fiber precursor in the form of a mat was cut out in a size of a length of 15 cm, a width of 15 cm and a height of approximately 15 cm and heated in an air atmosphere by using a batch type siliconit furnace. At that time, a degreasing process in which the temperature of the accumulated and molded body of the alumina fiber precursor was from 25°C to 800°C was performed while gas was exhausted at 1.5 Nm$^3$/h for 1 kg of the fiber precursor and the temperature was continuously increased at 3°C/min and increased to 800°C. The time required until this process was approximately 260 minutes. Thereafter, exhaustion was stopped at 800°C and the process was promptly transitioned to a crystallization process, and in the crystallization process until 1200°C, the temperature was raised at a temperature increasing rate of 20°C/min for approximately 20 minutes. Further, the temperature was held at 1200°C, which was the maximum temperature at that time, for 30 minutes. Subsequently, the alumina fiber aggregate was promptly taken out to a chamber at a temperature of approximately 23°C and left to naturally cool down in an air atmosphere. The temperature was measured by a thermocouple installed in the siliconit furnace.

The chemical composition (concentration, % by mass) of the alumina fiber aggregate of Example 1, which was left to naturally cool down, was measured basically in accordance with JIS R2216:2005 (fluorescent X-ray analysis method of refractory products), and based on the following method in detail. That is, to a gold-platinum bead pan (Pt/Au = 95/5) was added 0.5 mL of a peeling accelerator (a 30 mass% lithium iodide aqueous solution), thereto were added 6.0 g of lithium tetraborate and 0.3 g of alumina fiber after precisely weighed up to a unit of 0.1 mg, then a specimen for measurement (glass bead) was prepared by using an automatic bead-melting apparatus (ABS-II, manufactured by Rigaku Corporation) under a melting temperature of 1200°C, a melting time of 20 minutes and a cooling time of 20 minutes, and this was measured by using a fluorescent X-ray measuring device (ZSX100e, manufactured by Rigaku Corporation) to obtain fluorescent X-ray strength of silicon dioxide ($SiO_2$), ferric oxide ($Fe_2O_3$) and aluminum oxide ($Al_2O_3$) under the conditions described below. The concentration of each component was measured from a calibration curve which had been generated in advance by measuring refractory standard substances JRRM304, JRRM305, JRRM306, JRRM307, JRRM308, JRRM309, and JRRM310 (distributed by OKAYAMA CERAMICS RESEARCH FOUNDATION through entrustment from refractory technology association) for fluorescent X-ray analysis. In this case, as for the concentration of silicon dioxide and ferric oxide, the measurement values were used as they were, but for aluminum oxide, the concentration calculated by (Expression 2) in consideration of ignition asking loss (ig. loss) was used. The number of specimen for measurement was one.

(Expression 2)

Concentration of aluminum oxide (mass%) = 100 (mass%) - concentration of silicon dioxide (mass%) - concentration of ferric oxide (mass%) - 0.1 (mass%)

In addition, the refractory standard substance JRRM307 for fluorescent X-ray analysis was measured for every time before measurement and the measurement was made after adjusting a fluorescent X-ray measuring device in a case where the measurement values of silicon dioxide and ferric oxide were out of the range of the standard value ± 0.08 (% by mass).

A fiber diameter Df of the alumina fiber aggregate of Example 1, which was left to naturally cool down, was measured according to the following method. That is, in order to prepare a fiber sample, first, into a 50 mmϕ mold was put 15 g of the alumina fiber aggregate, and 28 kN of a load was repeatedly applied thereto twice by using a hydraulic press machine (Tester 25, manufactured by FOREVER Co., Ltd. (former name: Machina Co., Ltd.)) to compress and pulverize the fibers. Further, the pulverized fibers were fixed to a sample stage with a double-sided tape, followed by gold evaporation, to thereby prepare a sample for measuring the fiber diameter. This was imaged at a magnification of 1500 (voltage of 20 kV) by using a scanning electron microscope (JCM-5100, manufactured by JEOL Ltd.), 200 fibers excluding the fibers fused to each other were randomly selected therefrom, the apparent fiber diameter df (mm) was measured by using a digital vernier caliper (CD-15CP, manufactured by Mitutoyo Corporation). Further, the fiber diameter Df was calculated by using (Expression 4) by multiplying a correction coefficient F which was calculated by using (Expression 3) based on a pattern pitch length measured according to the same method by using an international standard sample (Hitachi Standard Meso-scale HMS-2000, manufactured by Hitachi Science Systems, Ltd.) with respect to the apparent fiber diameter df measured by the vernier caliper.

(Expression 3)

Correction coefficient F = (Average value described in test report of standard sample)/(Average value of pattern pitch repeatedly measured ten times)

(Expression 4)

Fiber diameter Df = Apparent fiber diameter df actually measured/1500 ×

Correction coefficient F

The arithmetic average of the fiber diameter Df was calculated to obtain an average fiber diameter and the ratio of the number of fibers having a diameter of 10 $\mu$m or greater was calculated.

The specific surface area of fibers constituting the alumina fiber aggregate of Example 1, which was left to naturally cool down, was measured according to the following method. That is, pulverized fibers were prepared by the same method as in the measurement of the fiber diameter in Example 1, the pulverized fibers were refined to a unit of 0.1 mg, then put into a provided sample cell, and subjected to a desorption treatment once under the conditions described below, and subsequently, nitrogen was adsorbed after 4 minutes from the start of cooling, and then the specific surface area was calculated from the nitrogen adsorption amount in the state of being returned to 20°C, by using a specific surface area measuring device (Macsorb HM model-1208, manufactured by Mountech Co., Ltd.). The number of specimens was two and the calculated arithmetic average value thereof was used as a measurement value.

- Carrier gas: helium
- Adsorbate: nitrogen
- Concentration of mixed gas: 30.8%
- Flow rate of mixed gas: 25 mL/min
- Desorption temperature and time: 250°C, 15 minutes
- Cooling temperature: -196°C (cooled in liquid nitrogen)
- Measured temperature and pressure: 20°C, 1 atm

The size of the mullite crystallite contained in each of the fibers constituting the alumina fiber aggregate of Example 1, which was left to naturally cool down, was obtained by measuring a diffraction peak under the conditions described below by using the fiber sample pulverized in the same manner as in the measurement of the specific surface area and also using a powder X-ray diffraction device (UltimalV, manufactured by Rigaku Corporation), to thereby acquire the full width half maximum of a peak having a 2$\theta$ angle of 40.9°, which particularly corresponds to the surface of the mullite crystal (1.2.1), and calculating the size of the crystallite. The size of the crystallite was obtained in accordance with a Scherrer method by using powder X-ray integrated analysis software (TDXL2, ver. 2.0.3.0, manufactured by Rigaku Corporation). The number of specimens was one.

- Wavelength of X-ray: CuK$\alpha$ rays (wavelength: 1.54178 Å)
- X-ray tube voltage and current: 40 V, 50 mA
- Range of measured angle 2$\theta$: 10° to 50°
- Scanning speed: 4°/min

The restoring magnification value related to the height after the repeatedly-compression test of the alumina fiber aggregate of Example 1, which was left to naturally cool down, was measured according to the following procedure. That is, a 36 mm$\phi$ cutout frame was pressed against the fired alumina fiber aggregate in the form of a mat and a columnar sample was cut out. The mass of the columnar sample was adjusted to be in 2.03 $\pm$ 0.02 g, the sample was vertically placed between movable stages of a precision universal testing machine (Autograph AG-1, manufactured by Shimadzu Corporation), and a compression operation within the sample height being from 4.0 mm to 4.5 mm, was repeatedly performed 1000 times by setting the cycle time to 4 times/min. Thereafter, the columnar sample was taken out onto a surface plate and the height L (mm) thereof after three hours was measured by a stainless steel JIS first class rule. The number of specimens was two and the calculated arithmetic average value thereof was set to a measurement value. The restoring magnification value R of the height, which serves as an index of the restorability, was set as "R = L (mm)/4(mm)."

The composition of alumina and silica, the kind and concentration of polyvinyl alcohol, the operating condition of a device, and the evaluation results related to Example 1 are listed in Table 1.

(Examples 2 to 5 and Comparative Examples 1 to 3)

Alumina fiber aggregates were prepared and the physical properties thereof were measured under the same conditions as those of Example 1 except that the composition of alumina and silica of the spinning dope and the kind or the concentration of polyvinyl alcohol which was added to the spinning dope were changed. The composition of alumina and silica, the kind and concentration of polyvinyl alcohol, the operating conditions of the device, and the evaluation results are listed in Table 1 together with Example 1.

[Table 1]

| | Unit | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Alumina component | (mass%) | 73 | 73 | 73 | 98 | 71 | 73 | 65 | 73 |
| Silica component | (mass%) | 27 | 27 | 27 | 2 | 29 | 27 | 35 | 27 |
| Degree of polymerization of polyvinyl alcohol | (- -) | 1700 | 1200 | 2000 | 1700 | 1700 | 1200 | 1700 | 1700 |
| Concentration of polyvinyl alcohol | (mass%) * | 8 | 8 | 8 | 8 | 8 | 7 | 8 | 13 |
| Viscosity of spinning dope | (mPa·sec) | 3300 | 1950 | 3900 | 3300 | 3300 | 1100 | 3300 | 6500 |
| Degreasing process — Starting temperature | (°C) | 25 | 25 | 25 | 25 | 25 | 25 | 25 | 25 |
| Degreasing process — Maximum temperature | (°C) | 800 | 800 | 800 | 800 | 800 | 800 | 800 | 800 |
| Degreasing process — Temperature increasing rate | (°C/min) | 3.0 | 3.0 | 3.0 | 3.0 | 3.0 | 3.0 | 3.0 | 3.0 |
| Degreasing process — Required time | (minutes) | 258.3 | 258.3 | 258.3 | 258.3 | 258.3 | 258.3 | 258.3 | 258.3 |
| Crystallization process — Starting temperature | (°C) | 800 | 800 | 800 | 800 | 800 | 800 | 800 | 800 |
| Crystallization process — Maximum temperature | (°C) | 1200 | 1200 | 1200 | 1200 | 1200 | 1200 | 1200 | 1200 |
| Crystallization process — Temperature increasing rate | (°C/min) | 20 | 20 | 20 | 20 | 20 | 20 | 20.0 | 20.0 |
| Crystallization process — Required time | (minutes) | 20.0 | 20.0 | 20.0 | 20.0 | 20.0 | 20.0 | 20.0 | 20.0 |
| Crystallization process — Holding time at maximum temperature | (minutes) | 30.0 | 30.0 | 30.0 | 30.0 | 30.0 | 30.0 | 30.0 | 30.0 |
| Total required time for degreasing process and crystallization process | (minutes) | 308.3 | 308.3 | 308.3 | 308.3 | 308.3 | 308.3 | 308.3 | 308.3 |
| Average fiber diameter | (μm) | 5.6 | 4.1 | 6.8 | 5.6 | 5.7 | 2.8 | 5.5 | 8.8 |
| Ratio of fibers having diameter of 10 μ or greater | (%) | 2.1 | 3.5 | 4.8 | 1.9 | 2.3 | 20.2 | 2.6 | 27.9 |
| Specific surface area | (m2/g) | 0.4 | 1.8 | 1.3 | 0.6 | 0.3 | 2 | 1.3 | 75 |
| Size of mullite crystallite | (Å) | 610 | 350 | 410 | 25 | 850 | 400 | 1740 | 590 |
| Restoring magnification value | (- -) | 9.1 | 3.5 | 4.9 | 3.5 | 6.7 | 1.5 | 2.4 | 1.3 |

*: ratio in which the solid content of alumina and silica is set to 100 (% by mass)

EP 2 949 791 A1

(Examples 6 to 8 and Comparative Examples 4 and 5)

Alumina fibers and alumina fiber aggregates containing the fiber were prepared and the physical properties thereof were measured under the same conditions as those of Example 1 except that a fiber precursor was prepared to have the same composition as that of Example 1, the maximum temperature during the crystallization process was changed in the range of 950°C to 1350°C, and the temperature increasing rate was changed such that the time required for increasing temperature during the crystallization process became the same. The composition of alumina and silica, the kind and concentration of polyvinyl alcohol, the operating conditions of the device, and the evaluation results are listed in Table 2.

[Table 2]

| | | Unit | Ex. 6 | Ex. 7 | Ex. 8 | Comp. Ex. 4 | Comp. Ex. 5 |
|---|---|---|---|---|---|---|---|
| Alumina component | | (mass%) | 73 | 73 | 73 | 73 | 73 |
| Silica component | | (mass%) | 27 | 27 | 27 | 27 | 27 |
| Degree of polymerization of polyvinyl alcohol | | (- -) | 1700 | 1700 | 1700 | 1700 | 1700 |
| Concentration of polyvinyl alcohol | | (mass%) * | 8 | 8 | 8 | 8 | 8 |
| Viscosity of spinning dope | | (mPa·sec) | 3300 | 3020 | 3300 | 3300 | 3300 |
| Degreasing process | Starting temperature | (°C) | 25 | 25 | 25 | 25 | 25 |
| | Maximum temperature | (°C) | 800 | 800 | 800 | 800 | 800 |
| | Temperature increasing rate | (°C/min) | 3.0 | 3.0 | 3.0 | 3.0 | 3.0 |
| | Required time | (minutes) | 258.3 | 258.3 | 258.3 | 258.3 | 258.3 |
| Crystallization process | Starting temperature | (°C) | 800 | 800 | 800 | 800 | 800 |
| | Maximum temperature | (°C) | 1000 | 1150 | 1300 | 950 | 1350 |
| | Temperature increasing rate | (°C/min) | 10.0 | 17.5 | 25.0 | 7.5 | 27.5 |
| | Required time | (minutes) | 20.0 | 20.0 | 20.0 | 20.0 | 20.0 |
| | Holding time at maximum temperature | (minutes) | 30.0 | 30.0 | 30.0 | 30.0 | 30.0 |
| Total required time for degreasing process and crystallization process | | (minutes) | 308.3 | 308.3 | 308.3 | 308.3 | 308.3 |
| Average fiber diameter | | (μm) | 5.9 | 4.6 | 5.2 | 6.0 | 5.2 |
| Ratio of fibers having diameter of 10 μ or greater | | (%) | 3.2 | 2.4 | 1.8 | 5.9 | 1.8 |
| Specific surface area | | (m2/g) | 67 | 17 | 0.4 | 74 | 0.4 |
| Size of mullite crystallite | | (Å) | 15 | 120 | 1430 | 0 | 2430 |
| Restoring magnification value | | (- -) | 3.2 | 6.2 | 3.6 | 1.7 | 2.1 |
| *: ratio in which the solid content of alumina and silica is set to 100 (% by mass) | | | | | | | |

From the results shown in Table 1, the alumina fiber aggregate having an average fiber diameter of from 3.0 μm to 8.0 μm and having a ratio of fibers having a fiber diameter of greater than 10 μm being 5% or less in terms of the number of fibers exhibited excellent shape restorability. Meanwhile, in the case where the alumina component of the alumina fiber was less than 70% by mass and the silica component thereof exceeded 30% by mass, the case where the average fiber diameter was less than 3.0 μm or greater than 8.0 μm even in the fibers having the same compositions, or the case where fibers having a fiber diameter exceeding 10 μm was greater than 5% in terms of the number of fibers, the shape restorability was decreased to less than 3.0. Thus, it was confirmed that the alumina fiber and the alumina fiber aggregate formed of the fibers of the present invention have an improved function of maintaining appropriate elasticity for a long period of time as compared to the conventional materials and have, for example, a function appropriate for a gripping material of an automotive honeycomb.

From the results shown in Table 2, in the case where the alumina fiber and the alumina fiber aggregate formed of the fibers were prepared in range of a maximum temperature during the crystallization process of from 950°C to 1350°C, the specific surface area of fibers or the ratio of containing fibers having a fiber diameter exceeding 10 $\mu$m changed, specifically, in the case where the fibers having a specific surface area of from 0.1 m$^2$/g to 70 m$^2$/g or the alumina fibers containing fibers having a fiber diameter exceeding 10 $\mu$m in 5% or less in terms of the number of fibers were used, the restoring magnification value exceeded 3.0. Thus, it is understood that the shape restorability with respect to compression deformation is improved as compared with the conventional alumina fiber aggregate.

The present invention has been described with reference to specific embodiments thereof, but it is obvious to a person skilled in the art that various changes and modifications can be made therein within the range not departing from the spirit and the scope of the present invention.

The present application is based on Japanese Patent Application (No. 2013-009801) filed on January 23, 2013, the content of which is incorporated herein by reference.

INDUSTRIAL APPLICABILITY

The alumina fiber aggregate of the present invention can be used for the same application as conventional one. For example, it can be used as a furnace material used when a furnace wall is constructed according to a block lining method or a stack lining method; a thermal insulating material such as a joint filling material for gaps generated in curved portions of a furnace wall or a packing for an inspection opening in a furnace in which the furnace atmosphere is controlled particularly because of its high resistivity against compression as compared with the conventional fibers; and materials of a gripping material for fixing a honeycomb such as a honeycomb for a catalyst converter for purifying exhaust gas of an automobile and a honeycomb for a diesel particulate filter. When a gripping material for fixing a honeycomb is produced, in general, an inorganic short fiber molded body can be, for example, impregnated with a binder such as acrylic emulsion or modified-acrylic emulsion.

**Claims**

1. An alumina fiber having:

   a chemical composition comprising an alumina of from 70% by mass to 98% by mass and a silica of from 2% by mass to 30% by mass,
   an average fiber diameter of from 3.0 $\mu$m to 8.0 $\mu$m,
   a ratio of fibers having a fiber diameter exceeding 10 $\mu$m being 5% or less based on the number of fibers, and
   a size of a mullite crystallite contained in each fiber of from 10 Å to 1500 Å.

2. The alumina fiber according to claim 1, having a specific surface area of the alumina fiber being from 0.1 m$^2$/g to 70 m$^2$/g.

3. An alumina fiber aggregate containing the alumina fiber according to claim 1 or claim 2.

## INTERNATIONAL SEARCH REPORT

International application No.

PCT/JP2014/051399

| A. CLASSIFICATION OF SUBJECT MATTER |
|---|
| *D01F9/08*(2006.01)i, *D04H1/4209*(2012.01)i |

According to International Patent Classification (IPC) or to both national classification and IPC

| B. FIELDS SEARCHED |
|---|

Minimum documentation searched (classification system followed by classification symbols)
D01F9/08-9/32, D04H1/4209

Documentation searched other than minimum documentation to the extent that such documents are included in the fields searched
Jitsuyo Shinan Koho          1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | WO 2004/003276 A1  (Denki Kagaku Kogyo Kabushiki Kaisha), 08 January 2004 (08.01.2004), description, pages 1 to 5; examples & US 2005/0227058 A1    & EP 1533409 A1 & CN 1665974 A | 1-3 |
| Y | JP 10-183427 A  (Taimei Chemicals Co., Ltd.), 14 July 1998 (14.07.1998), paragraphs [0007] to [0009] (Family: none) | 1-3 |
| Y | JP 60-106942 A  (Isolite Babcock Refractories Co. Ltd.), 12 June 1985 (12.06.1985), page 2, upper left column (Family: none) | 1-3 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April, 2014 (21.04.14) | 28 April, 2014 (28.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

13

**INTERNATIONAL SEARCH REPORT**

| International application No. |
| --- |
| PCT/JP2014/051399 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2003/072876 A1  (Mitsubishi Kagaku Sanshi Corp.),<br>04 September 2003 (04.09.2003),<br>description, pages 5, 10 to 11<br>& JP 2003-328235 A | 1-3 |
| A | JP 2005-120560 A  (Mitsubishi Kagaku Sanshi Corp.),<br>12 May 2005 (12.05.2005),<br>paragraphs [0019] to [0023], [0027]<br>& WO 2005/028727 A1        & EP 1681379 A1<br>& US 2006/0216225 A1      & EP 1887120 A1<br>& US 2009/0087652 A1      & US 2010/0187731 A1 | 1-3 |

Form PCT/ISA/210 (continuation of second sheet) (July 2009)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07286514 A
- JP 2003105658 A
- JP 2007332531 A
- JP 2005120560 A
- JP 2010031416 A
- JP 2013009801 A